# EUROPÄISCHE PATENTSCHRIFT

(11) **EP 1 323 970 B1**
(45) Veröffentlichungstag und Bekanntmachung des Hinweises auf die Patenterteilung: **02.08.2006**
(21) Anmeldenummer: 02450282.5
(22) Anmeldetag: 16.12.2002
(51) Int. Cl.: F16L 5/00

(54) **Rosette zum Abdecken eines Rohrdurchtrittes**
Rosette for covering for pipe transitions
Rosette de couverture pour ouvertures de passage des conduites

(30) Priorität: 14.12.2001 AT 19602001
(43) Veröffentlichungstag der Anmeldung: 02.07.2003
(73) Patentinhaber: Neuhofer, Franz, jun., 4893 Zell am Moos (AT)
(72) Erfinder: Neuhofer, Franz, jun., 4893 Zell am Moos (AT)
(74) Vertreter: Hübscher, Helmut

(56) Entgegenhaltungen:
- EP-A- 0 519 263
- DE-C- 3 935 731
- DE-U- 7 314 866
- DE-U- 8 506 575

## Beschreibung

Die Erfindung bezieht sich auf eine Rosette zum Abdecken eines Rohrdurchtrittes mit einem aus Kunststoff gefertigten Scheibenkörper, der eine Durchtrittsöffnung und einen zur Durchtrittsöffnung und zur Achse des Scheibenkörpers radialen Einführschlitz für ein Rohr aufweist.

Übliche Rosetten zum Abdecken von Rohrdurchtritten beispielsweise von Wasserleitungen oder Leitungen von Warmwasserheizungen bestehen aus einem Scheibenkörper mit einer zentralen Durchtrittsöffnung zur Aufnahme eines Rohres. Sind diese Scheibenkörper aus Kunststoff gefertigt und geschlitzt ausgeführt, so können die Rosetten aufgrund der elastischen Eigenschaften des Scheibenkörpers durch ein Aufweiten des Einführschlitzes radial auf das Rohr aufgesteckt werden. Nachteilig bei diesen bekannten Rosetten aus Kunststoff ist allerdings, daß sie wegen des vorgegebenen Durchmessers der Durchtrittsöffnung nur einem Rohrdurchmesser zugeordnet werden können, wenn ein Spalt zwischen Rohr und Scheibenkörper vermieden werden soll. Außerdem wird die Abdeckfläche im Hinblick einerseits auf Abstandsverhältnisse zu benachbarten Rohrleitungen oder anschließenden Wänden und anderseits auf die notwendige elastische Verformung des Scheibenkörpers zum Aufweiten des Einführschlitzes beschränkt. Beim Abdecken beispielsweise der Rohrdurchtritte zweier benachbarter Rohrleitungen durch je eine Rosette kann ja der Durchmesser der Scheibenkörper höchstens dem gegenseitigen Rohrabstand entsprechen. Mit der Breite des sich durch die Durchtrittsöffnung im Scheibenkörper ergebenden Ringes wird darüber hinaus das Aufweiten des Einführschlitzes schwieriger.

Schließlich ist es zur Anpassung an unterschiedliche Rohrabstände bei Doppelrosetten bekannt (DE 39 35 731 C1), wenigstens eine der beiden in einem Grundkörper angeordneten Rosetten mit einer exzentrischen Durchtrittsöffnung für das Rohr zu versehen und drehbar im Grundkörper zu lagern, so daß durch eine Verdrehung der Rosette der gegenseitige Lochabstand der Rosetten verändert wird. Diese Doppelrosetten lassen jedoch keine Anpassung an unterschiedliche Rohrdurchmesser oder der Grundplatte an einen Wandabstand zu. Eine Rosette zur Anpassung an verschiedene Rohrdurchmesser gemäß dem Oberbegriff des Anspruchs 1 ist aus DE 7,314,866 U bekannt.

Der Erfindung liegt somit die Aufgabe zugrunde, eine Rosette zum Abdecken eines Rohrdurchtrittes der eingangs geschilderten Art so zu verbessern, daß nicht nur eine Anpassung an unterschiedliche Rohrdurchmesser möglich wird, sondern auch eine vergleichsweise große Oberfläche sichergestellt werden kann, und zwar unter Wahrung eines verhältnismäßig geringen Seitenabstandes zu einer anschließenden Wand oder ein benachbartes Rohr.

Die Erfindung löst die gestellte Aufgabe dadurch, daß die Durchtrittsöffnung in Richtung des radialen Einführschlitzes exzentrisch angeordnet und von wenigstens einer Sollbruchstelle zum Ausbrechen einer Durchtrittserweiterung umschlossen ist, wobei die Sollbruchstelle und die Durchtrittsöffnung im Bereich der Mündung des Einführschlitzes eine gemeinsame Tangente haben.

Durch die exzentrische Anordnung der Durchtrittsöfnung wird die vorteilhafte Voraussetzung dafür geschaffen, trotz einer vergleichsweise großen Abdeckfläche einen geringen Seitenabstand zu einer anschließenden Wand oder einem benachbarten Rohrdurchtritt zu ermöglichen. Da außerdem die Durchtrittsöffnung gegen den Einführschlitz hin aus der Mitte des Scheibenkörpers versetzt ist, können die für das elastische Verhalten zum Aufweiten des Einführschlitzes maßgebenden radialen Abmessungen des Scheibenkörpers im Bereich des Einführschlitzes klein gehalten werden, so daß sich durch die Vergrößerung der Abdeckfläche keine Beeinträchtigungen bezüglich der Handhabung der Rosette ergeben. Schließlich wird durch die vorgesehene Sollbruchstelle eine Erweiterung der Durchtrittsöffnung auf einen größeren Rohrdurchmesser möglich, ohne die Verhältnisse hinsichtlich des Seitenabstandes oder der elastischen Aufweitung zu ändern, weil ja sowohl die Durchtrittsöffnung als auch die durch die Sollbruchstelle bestimmte Erweiterung von der Mündung des Einführschlitzes ausgehen und in diesem Bereich eine gemeinsame Tangente bilden.

Damit die Sollbruchstelle beim bestimmungsgemäßen Einsatz der Rosette nicht sichtbar ist, kann die Sollbruchstelle aus einer auf der Unterseite des Scheibenkörpers vorgesehenen Ringnut bestehen, die außerdem das Erweitern der Durchtrittsöffnung auf einen größeren Öffnungsdurchmesser erleichtert, wenn die Erweiterung z. B. durch einen entlang der Ringnut geführten Schnitt vorgenommen wird.

In der Zeichnung ist der Erfindungsgegenstand beispielsweise dargestellt. Es zeigen
Fig. 1 eine erfindungsgemäße Rosette in einer Untersicht und
Fig. 2 diese Rosette in einem Schnitt nach der Linie II-II der Fig. 1.

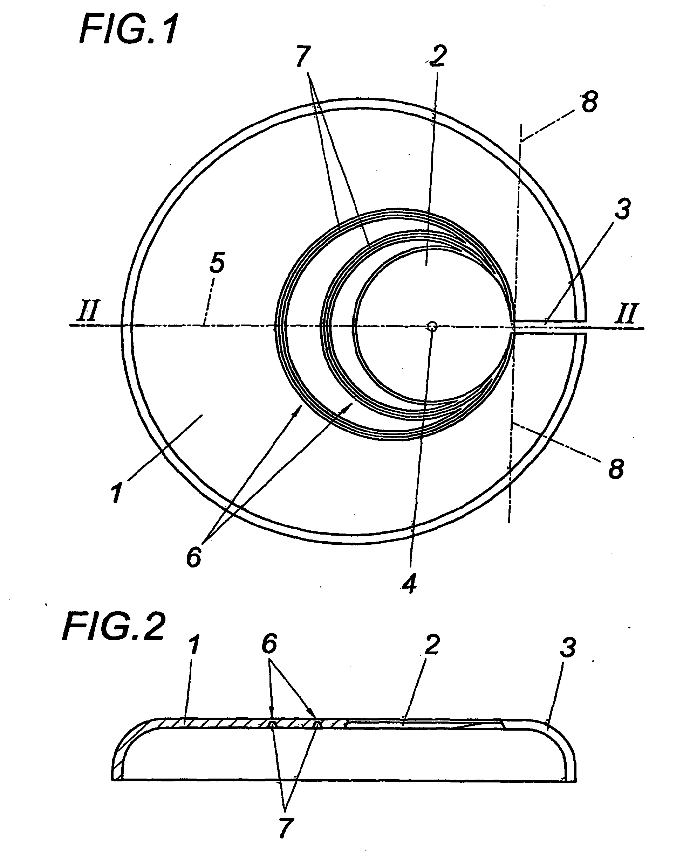

Die Rosette nach dem dargestellten Ausführungsbeispiel weist einen Scheibenkörper 1 mit einer exzentrisch angeordneten Durchtrittsöffnung 2 für ein Rohr auf, dessen Durchtritt durch einen Boden oder eine Wand mit Hilfe des Scheibenkörpers 1 abgedeckt werden soll. Radial zur Durchtrittsöffnung 2 bildet der Scheibenkörper 1 einen Einführschlitz 3. Die Anordnung ist dabei so getroffen, daß der Einführschlitz 3 und der Mittelpunkt 4 der kreisförmigen Durchtrittsöffnung 2 auf einem gemeinsamen Durchmesser 5 des Scheibenkörpers 1 liegen, wie dies in der Fig. 1 angedeutet ist. Da sich der Einführschlitz 3 auf der Schmalseite des sich durch die Durchtrittsöffnung 2 ergebenden Ringes des Scheibenkörpers 1 befindet, kann der Einführschlitz 3 aufgrund der elastischen Eigenschaften des Kunststoffes, aus dem der Scheibenkörper 1 gefertigt ist, ohne weiteres aufgeweitet werden, um die Rosette in radialer Richtung auf ein Rohr aufschieben zu können.

Zur Erweiterung der Durchtrittsöffnung 2 auf größere Öffnungsdurchmesser sind zusätzliche Sollbruchstellen 6 vorgesehen, die die Durchtrittsöffnung 2 umschließen. Diese Sollbruchstellen 6 werden durch kreisförmige Ringnuten 7 auf der Unterseite des Scheibenkörpers 1 gebildet, deren Mittelpunkte ebenfalls auf dem gemeinsamen Durchmesser 5 liegen, aber gegenüber dem Mittelpunkt 4 der Durchtrittsöffnung 2 versetzt angeordnet sind, um im Bereich der Mündung des Einführschlitzes 3 mit der Durchtrittsöffnung 2 eine gemeinsame Tangente 8 zu bilden. Dies bedeutet, daß die Länge des Einführschlitzes 3 sowohl für die Durchtrittsöffnung 2 als auch deren Erweiterungen gleich bleibt, was von der jeweiligen Größe der Durchtrittsöffnung 2 unabhängige kleinste Seitenabstände sicherstellt, die der Länge des Einführschlitzes 3 entsprechen. Aufgrund der Anordnung der Ringnuten 7 auf der Unterseite des Scheibenkörpers 1 bleiben diese Ringnuten 7 beim bestimmungsgemäßen Einsatz der Rosette unsichtbar.

## Patentansprüche

1. Rosette zum Abdecken eines Rohrdurchtrittes mit einem aus Kunststoff gefertigten Scheibenkörper (1), der eine Durchtrittsöffnung (2) und einen zur Durchtrittsöffnung (2) und zur Achse des Scheibenkörpers (1) radialen Einführschlitz (3) für ein Rohr aufweist, wobei die Durchtrittsöffnung (2) in Richtung des radialen Einführschlitzes (3) exzentrisch angeordnet und von wenigstens einer Sollbruchstelle (6) zum Ausbrechen einer Durchtrittserweiterun umschlossen ist, **dadurch gekennzeichnet daß** die Sollbruchstelle (6) und die Durchtrittsöffnung (2) im Bereich der Mündung des Einführschlitzes (3) eine gemeinsame Tangente (8) haben.

2. Rosette nach Anspruch 1, **dadurch gekennzeichnet, daß** die Sollbruchstelle (6) aus einer auf der Unterseite des Scheibenkörpers (1) vorgesehenen Ringnut (7) besteht.

## Claims

1. Rosette for covering pipe transitions having a disc body (1) made of plastic which comprises a passage opening (2) and an insertion slit (3) for a pipe which is radial with respect to the passage opening (2) and the axis of the disc body (1), wherein the passage opening (2) is eccentrically arranged in the direction of the radial insertion slit (3) and surrounded by at least one breaking point (6) for breaking out a passage expansion, **characterised in that** the breaking point (6) and the passage opening (2) have a common tangent (8) in the region of the mouth of the insertion slit (3).

2. Rosette according to claim 1, **characterised in that** the breaking point (6) consists of an annular groove (7) disposed on the lower side of the disc body (1).

## Revendications

1. Rosette de couverture pour ouvertures de passage des conduites, avec un corps discoïde (1) fabriqué en matière synthétique, présentant une ouverture de passage (2) et une fente d'insertion (3), radiale par rapport à l'ouverture de passage (2) et par rapport à l'axe du corps discoïde (1), pour un tube, où l'ouverture de passage (2) est disposée de façon excentrée dans la direction de la fente d'insertion (3) radiale et entourée par au moins un point destiné à la rupture (6), devant permettre une extension de passage par rupture, **caractérisée en ce que** le point destiné à la rupture (6) et l'ouverture de passage (2) ont, dans la zone de l'embouchure de la fente d'insertion (3), une tangente (8) commune.

2. Rosette selon la revendication 1, **caractérisée en ce que** le point destiné à la rupture (6) est formé d'une gorge annulaire (7), prévue en face inférieure du corps discoïde (1).
